# EUROPÄISCHE PATENTSCHRIFT

(11) **EP 3 433 308 B1**
(45) Veröffentlichungstag und Bekanntmachung des Hinweises auf die Patenterteilung: **22.07.2020**
(21) Anmeldenummer: 17721510.0
(22) Anmeldetag: 17.02.2017
(51) Int. Cl.: C08K 3/36, C01B 33/20, B01J 20/10, B01J 20/30, B01J 20/32

(54) **VERFAHREN ZUR HERSTELLUNG EINER SILIKATISCHEN ASCHE DURCH FIXIERUNG VON METALLEN, ÜBERGANGSMETALLEN UND/ODER DEREN OXIDEN AUF EINEM SILIKATISCHEN TRÄGERMATERIAL PFLANZLICHEN URSPRUNGES**
PROCESS FOR THE PRODUCTION OF A SILICEOUS ASH BY THE FIXING OF METALS, TRANSITION METALS AND/OR THEIR OXIDES ON A SILICEOUS SUPPORT MATERIAL OF VEGETABLE ORIGIN
PROCÉDÉ DE FABRICATION D'UNE CENDRE SILICATÉE PAR LAFIXATION DE MÉTAUX, DE MÉTAUX DE TRANSITION ET/OU DE LEURS OXYDES SUR DES MATÉRIAUX DE SUPPORT SILICEUX D'ORIGINE VÉGÉTALE

(30) Priorität: 24.02.2016 DE 102016002091; 10.01.2017 DE 102017000114
(43) Veröffentlichungstag der Anmeldung: 30.01.2019
(73) Patentinhaber: Green Sugar AG, 01662 Meißen (DE); Schmidt, Matthias, 01159 Dresden (DE); Kose, Frank, 13189 Berlin (DE)
(72) Erfinder: SCHMIDT, Matthias, 01159 Dresden (DE); KOSE, Frank, 13189 Berlin (DE)
(74) Vertreter: Gerber, Wolfgang
(86) Internationale Anmeldenummer: PCT/DE2017/000032
(87) Internationale Veröffentlichungsnummer: WO 2017/144035

(56) Entgegenhaltungen:
- WO-A1-2007/081431
- ANZAI T ET AL: "Removal of Humic Acid in Water by Rice Hull Magnetic Activated Carbon and Magnetic Separation", IEEE TRANSACTIONS ON APPLIED SUPERCONDUCTIVITY, IEEE SERVICE CENTER, LOS ALAMITOS, CA, US, Bd. 26, Nr. 4, 24. Dezember 2015 (2015-12-24), Seiten 1-4, XP011591645, ISSN: 1051-8223, DOI: 10.1109/TASC.2015.2512218 [gefunden am 2016-01-08]
- FEG-WEN CHANG ET AL: "Hydrogenation of CO2 over a rice husk ash supported nickel catalyst prepared by deposition-precipitation", INDUSTRIAL & ENGINEERING CHEMISTRY RESEARCH, AMERICAN CHEMICAL SOCIETY, US, Bd. 37, Nr. 10, 1. Januar 1998 (1998-01-01), Seiten 3838-3845, XP002533707, ISSN: 0888-5885, DOI: 10.1021/IE980152R

## Beschreibung

Die Erfindung betrifft ein Verfahren zur Herstellung einer silikatischen Asche durch Fixierung von Metallen, Übergangsmetallen und/oder deren Oxiden auf einem silikatischen Trägermaterial pflanzlichen Ursprunges.

### Stand der Technik

Im Patentantrag mit dem Aktenzeichen DE 10 2016 002 091.1, wurde offenbart, wie beliebige Metalle auf einem silikatischen Träger pflanzlichen Ursprunges fixiert werden können.

Das Verfahren umfasst folgende Verfahrensschritte:
1. Waschung einer silikathaltigen Biomasse mit einer Waschlösung, welche eine Säure, vorzugsweise eine Halogenwasserstoffsäure, vorzugsweise Salzsäure enthält. Dabei gehen Nichtsiliziummetalle (gemeint sind alle Metalle außer Silizium) in die Waschlösung über.
2. Die Waschlösung wird mit Hilfe eines beliebigen Prozesses entfernt und damit auch alle gelösten Nichtsiliziummetalle, die in Schritt 1 in die Waschlösung übergingen. Im Waschrückstand ist noch organisches Material enthalten.
3. Der Waschrückstand wird mit einer Flüssigkeit getränkt bzw. behandelt, die ein Metall (beispielsweise in gelöster Form als Ion) enthält. Die organische Struktur im Waschrückstand sorgt für eine gleichmäßige Verteilung der Flüssigkeit entlang der pflanzlichen Strukturen.
4. Verbrennung der getränkten Biomasse und Fixierung der vorhandenen Metalle auf dem silikatischen Gerüst der Pflanze, welches als Asche, auf der die vorhandenen Metalle fixiert wurden, zurückbleibt.

Üblicherweise erfolgt zwischen dem 3. und 4. Schritt noch eine Trocknung. Dies verändert jedoch nicht den Kern der Erfindung. Als Produkt ergeben sich silikatische Aschen, auf denen die in der Flüssigkeit (Schritt 3) enthaltenen Metalle fixiert sind. Mit silikathaltiger Biomasse werden alle Biomassen benannt, die mehr als 0,5% Silikate (bezogen auf die Trockenmasse der eingesetzten Biomasse) enthalten.

Diese Erfindung soll dahingehend erweitert werden, dass die Vorgehensweise und Randbedingungen des Verfahrens detaillierter geschildert werden sollen.

Des weiteren wurde im Patent DE 10 2014 014 177.3 offenbart, dass Silikate bzw. silikatische Materialien pflanzlichen Ursprunges als Zuschlagsstoff für Farben, Lacke, Kunststoffe, Elastomere und Leime geeignet sind. Die Anwendung dieser Silkate soll hiermit dahingehend erweitert werden, als dass Silikate bzw. silikatische Materialien pflanzlichen Ursprunges, auf denen Metalle fixiert wurden, farbig sind und deren Farbe durch die Auswahl der Metalle, welche auf den Silikaten bzw. silikatischen Materialien pflanzlichen Ursprunges fixiert wurden, bestimmt werden kann. Es ist somit möglich, die positiven Eigenschaften dieser Silikate (beispielsweise Erhöhung der Kratzfestigkeit) mit gestalterischen Aspekten (beispielsweise wichtig bei Farben und Lacken) zu verknüpfen.

WO 2007/081431 A1 und die darin genannte US 6,406,678 offenbaren ein Verfahren zur Herstellung einer Asche, dadurch gekennzeichnet, dass silikathaltige Reissspelze verwendet wird, besagte Reisspelze mit einem Oxidationsmittel getränkt wird, und besagte Reisspelze dann bei erhöhter Temperatur (über 500°C), aber unterhalb der Schmelztemperatur des silikatischen Gerüsts der Reisspelze verbrannt wird.

### Die Erfindung

Generell ist es mit dem Verfahren möglich, mehrere Metalle zu fixieren. Dies ergibt sich aus der Tatsache, dass der Mechanismus zur Fixierung für beliebige Metalle gültig ist und die Biomasse nach der Waschung somit auch mit Lösungen getränkt werden kann, die eine Mischung verschiedener Metalle enthält. Dies soll hier noch mal erwähnt und explizit beansprucht werden. Es hat sich gezeigt, dass auch Übergangsmetalle mit Hilfe des dargelegten Verfahrens fixiert werden können. Die Anwendung des Verfahrens auf Übergangsmetalle und Mischungen aus Übergangsmetallen und Metallen soll hiermit ebenfalls beansprucht werden. Im weiteren sollen mit Erwähnung der Metalle und/oder Übergangsmetalle immer auch deren Oxide inbegriffen sein und beansprucht werden.

Das Grundprinzip der Erfindung entsprechend dem Patent mit dem Aktenzeichen DE 10 2016 002 091.1, wie es im Abschnitt "Stand der Technik" offenbart wurde, bleibt unangetastet.

Gegenstand der Erfindung ist ein Verfahren gemäß Anspruch 1.

Es hat sich jedoch gezeigt, dass die Waschung und Entfernung der Nichtsiliziummetalle (alle Metalle außer Silizium) nicht in jedem Fall durchgeführt werden muss. Wichtig für die Funktionsweise des Verfahrens sind zwei Randbedingungen.
1. Es erfolgt eine Tränkung der pflanzlichen Biomasse mit einer Lösung, welche das Metall und/oder die Metalle und/oder das Übergangsmetall und/oder die Übergangsmetalle und/oder deren Mischungen enthält (auch in ionischer Form bzw. als gelöstes Salz möglich) und welche in die Biomasse eindringt. Das pflanzliche, nicht silikatische Material (beispielsweise das (Hemi-)Zellulosegerüst oder das Lignin) wirkt dabei als Schwamm. Die Lösung wird durch diese "Schwamm"wirkung gleichmäßig in der gesamten Biomasse verteilt. Somit kommt es zu einer Positionierung des Metalles und/oder der Metalle und/oder des Übergangsmetalles und/oder der Übergangsmetalle und/oder deren Mischungen auf allen zugänglichen Oberflächen des in der Pflanze enthaltenen silikatischen Gerüstes. Die in der Lösung enthaltenen Metalle und/oder Übergangsmetalle werden damit im Prozess der Verbrennung gleichmäßig auf dem nach der Verbrennung verbleibenden silikatischen Gerüst der pflanzlichen Biomasse fixiert. Dies ist beispielsweise für die Nutzung des entstehenden Verbennungsproduktes als Katalysator von Vorteil, da sich eine heterogene Katalyse immer an der Oberfläche des Katalysators vollzieht und die für die Katalyse nutzbare Fläche durch die gleichmäßige Verteilung der (übergangs-)metall-haltigen Lösung in der gesamten Biomasse maximiert wird. Zudem sind pflanzenbasierte Silikate bzw. silikatische Materialien pflanzlichen Ursprunges stark zerklüftet bzw. porös, da diese Silikate im Entstehungsprozess (dann, wenn die Pflanze wächst und lebt) in das Zellgerüst der Pflanze eingelagert werden und dieses nachbilden. (Nach der Verbrennung kann man beispielsweise deutlich Spaltöffnungen erkennen.) Damit sind Silikate pflanzlichen Ursprunges besonders für die heterogene Katalyse geeignet, wenn es gelingt, die dafür notwendigen Metalle maximal einzubringen und gleichmäßig zu verteilen. Die Tränkung kann auch in der gasförmigen Phase erfolgen, wenn es entweder gelingt, das Metall mittels chemischer Bindung an eine Substanz zu fixieren, welche verdampft werden kann oder das Metall selbst zu verdampfen.
2. Es muss darauf geachtet werden, dass es bei der Verbrennung nicht zur Bildung von Schmelzen kommt. Die entstehenden Schlacken sind als Katalysator bzw. Zuschlagsstoff nicht mehr geeignet. Dies ist gerade dann wichtig, wenn die Nichtsiliziummetalle durch eine vorhergehende Waschung nicht entfernt wurden, da diese Metalle den Schmelzpunkt des silikatischen Materiales erniedrigen. Das Verhindern der Entstehung von Schmelzen gelingt dadurch, dass man die Verbrennung bei niedrigeren Temperaturen durchführt, so dass keine Schmelzen entstehen. Auf der anderen Seite ist darauf zu achten, dass bei der Verbrennung der so genannte Koksausbrand erfolgt. Erfolgt dieser nicht, so verbleibt Koks im Verbrennungsrückstand. Das damit produzierte Material wäre nicht geeignet. Die Verbrennungstemperatur kann durch kontrollierte Beheizung (beispielsweise elektrisch, durch Gasverbrennung, Rauchgase) erhöht und durch die Erhöhung der zugeführten Luftmenge (diese wirkt beispielsweise kühlend, wenn die Luft nicht vorerwärmt wurde) erniedrigt werden. Wichtig ist somit, dass die Zündtemperatur des Kokses nicht unterschritten wird. Dieser liegt bei ca. 200 bis 280 °C. Dieser Temperaturbereich bildet die untere Grenze der Verbrennungstemperatur. Die obere Grenze kann nicht klar definiert werden, da sie davon abhängt, welche Nichtsiliziummetalle zu weichem Anteil in der Biomasse vorhanden sind.

Deshalb soll hier ein Bestimmungsverfahren (Bestimmungsverfahren 1) beschrieben werden, mit Hilfe dessen die untere als auch obere Grenze für die Durchführung der Verbrennung ermittelt werden können. Das Verfahren umfasst folgende Schritte.
Schritt 1: Man tränke die Biomasse in einer gewünschten (übergangs-) metallhaltigen Lösung (diese enthält alle gewünschten Metalle, Übergangsmetalle und deren Mischungen) und nehme diese als Grundmaterial für die Ermittlung des Temperaturbereiches, indem eine Verbrennung erfolgreich (Koksausbrand vollständig, keine Schlackenbildung) durchgeführt werden kann. Eine Vortrocknung vor der Verbrennung ist möglich.
Schritt 2: Die untere Grenze der Verbrennungstemperatur wird mit der Variable T(unten) bezeichnet und mit einem Wert von 200°C postuliert.
Schritt 3: Das getränkte Material (entsprechend Schritt 1) wird bei der Temperatur entsprechend T(unten) verbrannt. Ist der Koksausbrand vollständig, ist somit die untere Grenze für die Verbrennungstemperatur bestimmt und wird hier mit dem Wert entsprechend T(unten), unabhängig von der Nutzung der Variable T(unten) als Hilfsvariable in Schritt 5, festgesetzt. Bei vollständigem Koksausbrand geht es weiter mit Schritt 4. Ist der Koksausbrand nicht erfolgreich, wird T(unten) um 1 °C erhöht und Schritt 2 wiederholt.
Schritt 4: Die obere Grenze der Verbrennungstemperatur wird mit der Variable T(oben) bezeichnet und mit einem Wert von 2000°C postuliert.
Schritt 5: Das getränkte Material wird bei der Temperatur entsprechend T(oben) verbrannt. Entstehen dabei Schlacken, so wird T(oben) neu berechnet. T(oben) ergibt sich (bei Schlackenbildung) aus dem Durchschnitt von T(oben) und T(unten). Entstehen dabei keine Schlacken, so werden T(unten) und T(oben) um den Differenzbetrag zwischen T(oben) und T(unten) erhöht und danach T(oben) durch Ermittlung des Durchschnittswertes von T(unten) und T(oben) neu ermittelt und definiert. Schritt 5 wird so lange fortgesetzt, bis sich die Temperaturen T(oben) und T(unten) um weniger als 0,01°C unterscheiden.

Die obere Grenze für die Verbrennungstemperatur wird mit dem Wert entsprechend T(oben), so wie er sich aus Schritt 5 ergibt, festgesetzt.

Dieses Bestimmungsverfahren kann unabhängig davon, ob eine Waschung zur Entfernung von unerwünschten Nichtsiliziummetallen erfolgte, angewendet werden. Erfindungsgemäß wird der Temperaturbereich für die Verbrennung im Verbrennungsschritt in einer Reihe von Testversuchen wie im Anspruch 1 definiert bestimmt.

In der Praxis kann es vorkommen, dass der Koksausbrand erst dann stattfindet, wenn bereits die Bildung von Schlacken einsetzt. In diesem Fall ist die Waschung mit einer Säure (oder einem anderen Stoff, der in der Lage ist, Nichtsiliziummetalle in ihre lösliche Form zu überführen) und die Überführung der Nichtsiliziummetalle in ihre lösliche Form als auch deren Entfernung unumgänglich.

Die vollständige Entfernung aller Nichtsiliziummetalle mittels Waschung und Entfernung der Waschlösung ist erstrebenswert, jedoch in der Praxis schwer zu erreichen und zumeist für die Anwendung des Produktes nicht immer notwendig. Es hat sich gezeigt, dass bereits Reinheiten (Reinheit entspricht hier Massenanteil Silizium im Verhältnis zur Masse aller Metalle) von >50% ausreichend waren, um gebrauchsfähige Produkte (hier für die Zumischung in Farben und Lacken) zu erzeugen. Dieser niedrig erscheinende Wert muss dahingehend erläutert werden, als dass die Metalle, welche mit dem Tränken der Biomasse hinzugefügt werden, ebenfalls Nichtsiliziummetalle sind und prinzipiell zur Bildung von Schmelzen führen können (hier kann wieder das Verfahren zur Bestimmung der Temperaturunter- und obergrenzen angewendet werden). Während man bei der Waschung (inklusive Entfernung der Waschlösung) also Nichtsiliziummetalle entfernt, führt man diese mittels Tränkung wieder zu. Die Neuerung besteht darin, dass man das Spektrum der vorhandenen Nichtsiliziummetalle mittels Waschung (inklusive Entfernung der Waschlösung) und Tränkung definiert einstellen kann. So sind neben den Metallen auch Übergangsmetalle, die hiermit beansprucht werden sollen, geeignet. Diese (beispielsweise Uran) können ein hohes Molekulargewicht aufweisen und lassen den Reinheitswert somit niedrig erscheinen.

Als Waschlösung können prinzipiell alle Stoffe verwendet werden, die es ermöglichen, die Nichtsiliziummetalle in der Biomasse in ihre lösliche Form zu überführen. Der Begriff "Lösung" kann beispielsweise auch dahingehend erweitert werden, als dass gasförmige Stoffe geeignet sind, Nichtsiliziummetalle in ihre lösliche Form zu überführen. So ist es beispielsweise möglich, feuchte Biomasse mittels gasförmigen Chlorwasserstoffs zu behandeln. Der Chlorwasserstoff absorbiert in der feuchten Biomasse und bildet dort Salzsäure, die wiederum vorhandene Metalle und deren Oxide in die entsprechenden Chloride überführt und somit löslich macht. Die so in der Biomasse generierte Waschlösung kann mittels Verdrängung durch destilliertes Wasser entfernt werden. Die nachfolgenden Schritte können wie beschrieben durchgeführt werden.

Neben der bevorzugten Salzsäure sind prinzipiell auch alle anderen Säuren geeignet, Nichtsiliziummetalle in ihre lösliche Form zu überführen. Einschränkungen ergeben sich dadurch, dass manche Säuren mit verschiedenen Metallen unlösliche Salze bilden, so bildet Schwefelsäure mit Kalzium Kalziumsulfat (Gips). Doch auch hier kann es sich ergeben, dass Kalzium nur zu einem sehr geringen Maße in der Biomasse vorhanden und es einem Anwender möglich ist, preiswerte Schwefelsäure (beispielsweise als Abfallstrom in einem anderen Prozess) zu verwerten, somit eine wirtschaftlich sinnvolle Waschung mittels Schwefelsäure durchzuführen, insbesondere dann, wenn die Waschung bei höheren Temperaturen (beispielsweise als Kochung und/oder unter Druck) erfolgt. Dann können Säuren auch in niedriger Konzentration eingesetzt werden.

Die Entfernung der Waschsäure erfolgt vorzugsweise mittels Verdrängung durch destilliertes Wasser. Es ist jedoch auch jede andere Substanz denkbar. Grundlegend ist nur, dass die zuvor in Lösung gebrachten Nichtsiliziummetalle aus der Biomasse entfernt werden und nicht in der Substanz enthalten sind, die für die Verdrängung genutzt wird.

Die Essenz des Verfahrens besteht also darin, das Spektrum der in der silikathaltigen Biomasse vorhandenen Nichtsiliziummetalle entsprechend der gewünschten Ansprüche zu definieren, diese vorhandenen Metalle mittels Verbrennung am Silikatgerüst zu fixieren und bei der Verbrennung darauf zu achten, dass einerseits der Koksausbrand vollständig erfolgt und andererseits keine Schmelzen entstehen (Bestimmungsverfahren 1 kann dazu verwendet werden). Das Spektrum der Nichtsiliziummetalle wird definiert, indem die in der Biomasse enthaltenen nicht erwünschten Nichtsiliziummetalle mittels Waschung (bevorzugt mit Säure, bevorzugt mit Salzsäure) in ihre lösliche Form überführt werden und die für die Waschung verwendete Waschlösung entfernt wird (vorzugsweise durch Verdrängung mit destilliertem Wasser). Die so von nicht erwünschten Nichtsiliziummetallen befreite Biomasse kann optional getrocknet werden und wird dann mit einer Lösung getränkt, in der die gewünschten Nichtsiliziummetalle enthalten sind. Diese vorbehandelte Biomasse kann optional getrocknet werden und wird dann der Verbrennung zugeführt.

Die Konzentration der verwendeten Säure ist nicht relevant, da eine verringerte Fähigkeit, die unerwünschten Nichtsiliziummetalle in ihre lösliche Form zu überführen, durch eine vergrößerte Menge an Waschsäure als auch durch Temperaturerhöhung während der Waschung kompensiert werden kann.

Die Verbrennung kann in Öfen mit beliebiger Form durchgeführt werden. Bevorzugt wird die die Verbrennung in einem Drehrohrofen oder einer Wirbelschichtverbrennung.

Je nachdem, wie man die Verbrennung führt (beispielsweise durch Variation der Zufuhr von Verbrennungsluft und/oder Sauerstoff) oder die Verbrennungstemperatur regelt, fixiert man die Metalle in unterschiedlicher Weise. Unter eher oxidierenden Bedingungen fixiert man die Metalle als Metalloxide auf dem silikatischem Träger. Unter wenig oxidierenden bzw. reduzierenden Bedingungen fixiert man die Metalle in elementarer Form auf dem silikatischem Träger. Es ist ebenso möglich, andere Metallverbindungen, wie z.B. Carbide, auf den Silikaten aufzubringen.

Die so fixierten Metalle können nach der Verbrennung unter Verwendung von Reduktions- bzw. Oxidationsmitteln in ihrer Oxidationsstufe verändert werden.

Die so fixierten Metalle können in Einheit mit dem Trägermaterial in der chemischen Industrie als katalytische Hilfsmittel zur Katalyse chemischer Reaktionen eingesetzt werden (heterogene Katalyse). Die Fixierung der katalytisch wirksamen Metalle geht dabei nicht verloren.

Neben der Nutzung als Katalysator können die entstandenen Aschen auch als Zuschlagstoff für Farben, Lacke, Kunststoffe, Elastomere und Leime verwendet werden. Ein Effekt ist schon bei einer Dosis von 1 mg/kg gegeben. Die Neuerung hier ergibt sich aus der Tatsache, dass die entstehenden Aschen, je nachdem welches Metall, Übergangsmetall bzw. Mischung aus mehreren Metallen und/oder Übergangsmetallen darauf fixiert wurde bzw. wurden, unterschiedlich farbig sind. Diese Farbigkeit kann gezielt ausgenutzt und mit den positiven Eigenschaften der Silikate kombiniert werden.

## Patentansprüche

1. Verfahren zur Herstellung einer silikatischen Asche durch Fixierung von Metallen, Übergangsmetallen und/oder deren Oxiden auf einem silikatischen Trägermaterial pflanzlichen Ursprunges, **gekennzeichnet dadurch, dass** :
a. eine silikathaltige pflanzliche Biomasse bereitgestellt wird, wobei diese mehr als 0,5% Silikate, bezogen auf die Trockensubstanz der Biomasse, enthält,
b. die pflanzliche Biomasse mit einer Lösung getränkt wird, welche Metalle und/oder Übergangsmetalle und/oder deren Oxide bzw. deren Mischungen enthält,
c. die in der pflanzlichen Biomasse vorhandenen Metalle und/oder Übergangsmetalle und/oder deren Oxide bzw. deren Mischungen in einem Verbrennungsschritt auf dem silikatischen Gerüst der pflanzlichen Biomasse fixiert werden, welches am Ende der Verbrennung als Asche, auf der die vorhandenen Metalle und/oder Übergangsmetalle und/oder deren Oxide bzw. deren Mischungen fixiert wurden, zurückbleibt,
d. wobei optional eine Vortrocknung der Biomasse vor dem Verbrennungsschritt c. durchgeführt werden kann,
wobei die Temperatur im Verbrennungsschritt so geführt wird, dass keine Schmelzen entstehen und dass der Koksausbrand vollständig erfolgt, wobei
der Temperaturbereich für die Verbrennung im Verbrennungsschritt in einer Reihe von Testversuchen wie folgt bestimmt wird:
Schritt 1: Tränken der pflanzlichen Biomasse in der Lösung, welche die gewünschten Metalle und/oder Übergangsmetalle und/oder deren Oxide bzw. deren Mischungen enthält;
Schritt 2: Verbrennung der getränkten pflanzlichen Biomasse bei einer Temperatur T (unten) zwecks Koksausbrand, wobei die Temperatur T (unten) die untere Grenze der Verbrennungstemperatur bezeichnet und mit einem Wert von 200°C postuliert wird;
Schritt 3: falls der Koksausbrand vollständig ist, Festsetzung der Temperatur T (unten) als untere Grenze für die Verbrennungstemperatur, unabhängig von der Nutzung der Variable T (unten) als Hilfsvariable in Schritt 5, und Fortsetzung mit Schritt 4, falls der Koksausbrand nicht vollständig ist, Erhöhung der Temperatur T (unten) um 1°C und Wiederholung von Schritt 2;
Schritt 4: Verbrennung der getränkten pflanzlichen Biomasse bei einer Temperatur T (oben), wobei die Temperatur T (oben) die obere Grenze der Verbrennungstemperatur bezeichnet und mit einem Wert von 2000°C postuliert wird;
Schritt 5: falls bei der Verbrennung des Schrittes 4 Schmelzen entstehen, Berechnung einer neuen Verbrennungstemperatur T (oben), wobei sich diese neue Verbrennungstemperatur aus dem Durchschnitt von T (oben) und T(unten) ergibt, falls bei der Verbrennung des Schrittes 4 keine Schmelzen entstehen, Berechnung einer neuen Verbrennungstemperatur T (oben), wobei diese neue Verbrennungstemperatur ermittelt wird, indem T (unten) und T(oben) um den Differenzbetrag zwischen T (oben) und T (unten) erhöht und danach ein Durchschnittswert von T (unten) und T (oben) gebildet wird;
Schritt 6: Fortsetzung von Schritt 5, bis sich die Temperaturen T (oben) und T (unten) um weniger als 0,01°C unterscheiden, wobei die obere Grenze für die Verbrennungstemperatur mit dem Wert entsprechend T(oben) wie sie sich aus Schritt 5 ergibt, festgesetzt wird.

2. Verfahren nach Anspruch 1, **gekennzeichnet dadurch, dass** das Verfahren weiterhin einen Schritt a2 zur Entfernung von vorhandenen Nichtsiliziummetallen mittels Waschung in einer Waschlösung, welche vorhandene Nichtsiliziummetalle in Lösung bringt, und Entfernung der Waschlösung umfasst, wobei der Schritt a2 nach dem Schritt a und vor dem Schritt b durchgeführt wird, und wobei der Begriff Nichtsiliziummetalle alle Metalle außer Silizium bezeichnet.

3. Verfahren nach Anspruch 2, **gekennzeichnet dadurch, dass** die Waschlösung Salzsäure in jeglicher Konzentration enthält.

4. Verfahren nach den Ansprüchen 1 bis 3, in dem die Verbrennung unter oxidativen und/oder reduktiven Bedingungen geführt wird und somit die Oxidationsstufe der fixierten Metalle variiert werden kann.

5. Verfahren nach den Ansprüchen 1 bis 4, **gekennzeichnet dadurch, dass** die silikatischen Aschen nach der Verbrennung unter Zuhilfenahme von Oxidations- oder Reduktionsmitteln oxidativ bzw. reduktiv behandelt und die fixierten Metalle in ihrer Oxidationsstufe verändert werden.

6. Verfahren zur Herstellung von beaufschlagten Kunststoffen, Elastomeren, Farben, Lacken und/oder Leimen, umfassend die Herstellung einer silikatischen Asche gemäß der Ansprüche 1 bis 5, und Zumischen der silikatischen Asche zu Kunststoffen, Elastomeren, Farben, Lacken und/oder Leimen.

7. Verfahren gemäß Anspruch 6, wobei die Asche in einer Dosis von > 1 mg/kg zugemischt wird.

## Claims

1. Process for producing a siliceous ash by the fixing of metals, transition metals and/or oxides thereof on a siliceous support material of vegetable origin, **characterized in that**:
a. a siliceous vegetable biomass containing more than 0.5% of silicates, based on the dry matter of the biomass, is provided,
b. the vegetable biomass is impregnated with a solution containing metals and/or transition metals and/or oxides thereof or mixtures thereof,
c. the metals and/or transition metals and/or oxides thereof or mixtures thereof present in the vegetable biomass are fixed on the siliceous framework of the vegetable biomass in a combustion step, leaving the siliceous framework on which the metals and/or transition metals and/or oxides thereof or mixtures thereof present have been fixed as ash at the end of the combustion,
d. where predrying of the biomass can optionally be carried out before the combustion step c.,
where the temperature in the combustion step is maintained so that no melts are formed and so that burning out of carbon proceeds to completion, where
the temperature range for the combustion in the combustion step is determined as follows in a series of tests:
step 1: impregnation of the vegetable biomass with the solution containing the desired metals and/or transition metals and/or oxides thereof or mixtures thereof;
step 2: combustion of the impregnated vegetable biomass at a temperature T (lower) for the purpose of burning out carbon, where the temperature T (lower) is the lower limit of the combustion temperature and is postulated to have a value of 200°C;
step 3: if burning out of carbon is complete, setting of the temperature T (lower) as lower limit for the combustion temperature, independently of the utilization of the variable T (lower) as auxiliary variable in step 5, and continuation with step 4 if the burning out of carbon is not complete, increasing the temperature T (lower) by 1°C and repetition of step 2;
step 4: combustion of the impregnated vegetable biomass at a temperature T (upper), where the temperature T (upper) is the upper limit of the combustion temperature and is postulated to have a value of 2000°C;
step 5: if melts are formed in the combustion of step 4, calculation of a new combustion temperature T (upper), where this new combustion temperature is given by the average of T (upper) and T (lower), if no melts are formed in the combustion of step 4, calculation of a new combustion temperature T (upper), where this new combustion temperature is determined by increasing T (lower) and T (upper) by the absolute value of the difference between T (upper) and T (lower) and then forming an average of T (lower) and T (upper);
step 6: continuation of step 5 until the temperatures T (upper) and T (lower) differ by less than 0.01°C, where the upper limit for the combustion temperature is set as the value corresponding to T (upper) as obtained from step 5.

2. Process according to Claim 1, **characterized in that** the process further comprises a step a2 for the removal of nonsilicon metals present by means of washing in a washing solution which brings nonsilicon metals present into solution and removal of the washing solution, where step a2 is carried out after step a and step b and where the term nonsilicon metals refers to all metals apart from silicon.

3. Process according to Claim 2, **characterized in that** the washing solution contains hydrochloric acid in any concentration.

4. Process according to any of Claims 1 to 3, wherein the combustion is carried out under oxidative and/or reductive conditions and the oxidation state of the fixed metals can thus be varied.

5. Process according to any of Claims 1 to 4, **characterized in that** the siliceous ashes after the combustion are oxidatively or reductively treated with the aid of oxidizing or reducing agents and the oxidation state of the fixed metals is varied.

6. Process for producing modified plastics, elastomers, paints, varnishes and/or glues comprising production of a siliceous ash according to any of Claims 1 to 5 and mixing of the siliceous ash into plastics, elastomers, paints, varnishes and/or glues.

7. Process according to Claim 6, wherein the ash is added in an amount of > 1 mg/kg.

## Revendications

1. Procédé pour la préparation d'une cendre silicatée par fixation de métaux, de métaux de transition et/ou de leurs oxydes sur un matériau de support silicaté d'origine végétale, **caractérisé en ce que** :
a. une biomasse végétale contenant un silicate est mise à disposition, celle-ci contenant plus de 0,5 % de silicate, par rapport à la substance sèche de la biomasse,
b. la biomasse végétale est trempée avec une solution qui contient des métaux et/ou des métaux de transition et/ou leurs oxydes ou leurs mélanges,
c. les métaux et/ou les métaux de transition et/ou leurs oxydes ou leurs mélanges présents dans la biomasse végétale sont fixés sur le squelette silicaté de la biomasse végétale dans une étape d'incinération, qui, à la fin de l'incinération, reste en tant que cendre sur laquelle ont été fixés les métaux et/ou les métaux de transition et/ou leurs oxydes ou leurs mélanges présents,
d. un pré-sèchement de la biomasse avant l'étape d'incinération c. pouvant éventuellement être mis en œuvre,
la température dans l'étape d'incinération étant conduite de telle manière qu'aucune masse fondue n'apparaisse et que la combustion de coke soit totale,
la plage de température pour l'incinération dans l'étape d'incinération étant déterminée dans une série de tests comme suit :
étape 1 : trempage de la biomasse végétale dans la solution qui contient les métaux et/ou les métaux de transition et/ou leurs oxydes ou leurs mélanges souhaités ;
étape 2 : incinération de la biomasse végétale trempée à une température T (inférieure) à des fins de combustion de coke, où la température T (inférieure) désigne la limite inférieure de la température d'incinération et on postule que la température T a une valeur de 200 °C ;
étape 3 : dans le cas où la combustion de coke est totale, établissement de la température T (inférieure) en tant que limite inférieure pour la température d'incinération, indépendamment de l'utilisation de la variable T (inférieure) en tant que variable auxiliaire dans l'étape 5, et continuation avec l'étape 4, dans le cas où la combustion de coke n'est pas totale, augmentation de la température T (inférieure) de 1 °C et répétition de l'étape 2 ;
étape 4 : incinération de la biomasse végétale trempée à une température T (supérieure), où la température T (supérieure) désigne la limite supérieure de la température d'incinération et on postule que la température T a une valeur de 2 000 °C ;
étape 5 : dans le cas où lors de l'incinération de l'étape 4 des masses fondues apparaissent, calcul d'une nouvelle température d'incinération T (supérieure), cette nouvelle température d'incinération résultant de la moyenne de T (supérieure) et T (inférieure), dans le cas où lors de l'incinération de l'étape 4 aucune masse fondue n'apparaît, calcul d'une nouvelle température d'incinération T (supérieure), cette nouvelle température d'incinération étant déterminée par le fait que T (inférieure) et T (supérieure) sont augmentées de la différence entre T (supérieure) et T (inférieure) et ensuite une valeur moyenne de T (inférieure) et T (supérieure) est formée ;
étape 6 : continuation de l'étape 5, jusqu'à ce que la température T (supérieure) et T (inférieure) se différencient de moins de 0,01 °C, la limite supérieure pour la température d'incinération étant fixée avec la valeur correspondant à T (supérieure) telle qu'elle résulte de l'étape 5.

2. Procédé selon la revendication 1, **caractérisé en ce que** le procédé comprend en outre une étape a2 pour l'élimination de métaux de non-silicium au moyen d'un lavage dans une solution de lavage qui met en solution des métaux de non-silicium présents, et l'élimination de la solution de lavage, l'étape a2 étant mise en œuvre après l'étape a et avant l'étape b, et le terme « métaux de non-silicium » désignant tous les métaux sauf le silicium.

3. Procédé selon la revendication 2, **caractérisé en ce que** la solution de lavage contient de l'acide chlorhydrique en une quelconque concentration.

4. Procédé selon les revendications 1 à 3, dans lequel l'incinération est conduite dans des conditions oxydantes et/ou réductrices et ainsi l'état d'oxydation des métaux fixés peut être varié.

5. Procédé selon les revendications 1 à 4, **caractérisé en ce que** les cendres silicatées, après l'incinération, sont traitées de manière oxydante ou réductrice avec l'assistance d'agents d'oxydation ou de réduction et les métaux fixés sont modifiés dans leur état d'oxydation.

6. Procédé pour la préparation de plastiques, d'élastomères, de peintures, de laques et/ou de colles alimenté(e)s, comprenant la préparation d'une cendre silicatée selon les revendications 1 à 5, et le mélange de la cendre silicatée à des plastiques, des élastomères, des peintures, des laques et/ou des colles.

7. Procédé selon la revendication 6, la cendre étant ajoutée en une dose de > 1 mg/kg.
